# EUROPEAN PATENT APPLICATION

(11) **EP 3 571 922 A1**
(43) Date of publication of application: **27.11.2019**
(21) Application number: 18382361.6
(22) Date of filing: 25.05.2018
(51) Int. Cl.: A01F 25/00

(54) **STORE FOR ALFALFA BALES**

(71) Applicant: Fire Applied Technologies, S.L., 08185 Lliça de Vall (Barcelona) (ES)
(72) Inventor: GARCIA CORRAL, NORMAN, 08185 LLIÇA DE VALL (BARCELONA) (ES)
(74) Representative: Durán-Corretjer, S.L.P.

(57) **Abstract**

Store for fodder bales, comprising an enclosure delimiting, in the interior thereof, an arrangement of fodder bales (1), said store being characterised in that it comprises a plurality of hydrocarbon sensors (2) arranged around said fodder bales (1).

## Description

The present application relates to a store for alfalfa bales.

Bales of fodder, such as alfalfa, can ferment autonomously depending on the moisture content thereof. Said autonomous fermentation is a problem that arises when the moisture content of said fodder is very high.

The humidity of the environment surrounding the bale has a direct effect, it being possible for said bale to combust. The higher said humidity, the higher the possibility of fermentation.

Fermentation produces hydrocarbons, and said fermentation and release of hydrocarbons generates heat inside the bales, which is generally not immediately obvious. This phenomenon causes the interior of the bale to combust, which can completely destroy said bale.

Said generation of heat is caused, in part, by the presence of microorganisms in the fodder. Even when the fodder has been cut and formed into bales, the cells contained therein continue to respire and produce chemical reactions. The energy required for said reactions produces an accumulation of heat.

This activity is maintained provided that the moisture content in the fodder is optimal. The heat generated by the microorganisms can cause oxidation reactions which in turn continue to increase the temperature. Under said conditions, if oxygen is present, spontaneous combustion can occur.

Stored fodder having a high sugar content, such as alfalfa, generally has high nutritional value, but may be at greater risk of heating up and subsequently combusting.

This phenomenon is very difficult to detect since any visible or audible sign of said combustion, such as smoke or flames, appears long after combustion has started. Therefore, said combustion is extremely difficult to stop once started.

Typically, the fodder is exposed to the sun in order to reduce the moisture content thereof and the fodder is then baled in order to facilitate transportation and storage thereof. This process makes it possible for the fodder to retain the nutritional qualities thereof. Slight heating of said fodder during the first days of storage is almost inevitable. But when said heating is excessive, damage can be caused by the heat and even spontaneous combustion can ensue, with the risk of fire. These phenomena entail considerable material and economic losses. Currently, there is no satisfactory technical solution for controlling the moisture content. This lack of solutions has led to insurance companies no longer insuring said fodder bales, which compounds the problem and makes it necessary to find a solution.

To this end, it is an object of the present invention to disclose a solution to the problem of controlling the spontaneous combustion of the fodder bales.

More specifically, the present invention discloses a store for fodder bales, comprising an internally delimited enclosure for an arrangement of fodder bales, said store being characterised in that it comprises a plurality of hydrocarbon sensors arranged around said fodder bales. Preferably, said hydrocarbon sensors are methane sensors. Said sensors make it possible to detect signs of fermentation of the fodder bales, and to prevent fermentation and subsequent combustion thereof. In this way, it is intended for the moisture content to be kept at the levels required for controlling said fermentation and preventing said combustion.

In a preferred embodiment, the hydrocarbon sensors are movable sensors. More preferably, they are placed on guides. Even more preferably, said guides are rails. In this way, it is possible to remove and/or move the plurality of sensors out of the way in order to facilitate removal and placement of the fodder bales, and to facilitate possible restructuring of the store. The present invention also envisages placing said sensors on movable or retractable curtains.

Preferably, the sensors are connected to the guides or rails by means of sliding connection means. More preferably, they are screwed on.

In another possible embodiment, the fodder bale store of the present invention comprises a plurality of sensors arranged such that said sensors are suspended.

The hydrocarbon sensors of the store of the present invention are preferably placed at different heights. In this way, the level of hydrocarbons in different regions of a single bale can be detected, at the same time as allowing said control when the bales are stored vertically at a particular height or at different heights. More preferably, said sensors are placed on columns. In an even more preferable embodiment, said columns are movable. In this way, the columns can be moved in order to facilitate possible repositioning of the bales and sensors in the store. In a preferred embodiment, said columns are symmetrical profiles that are connected in the shape of a quadrilateral and protected by covers in the places where the sensors are located. Said profiles can be joined by means of a bar having a variable length. This makes it possible for said profiles to be interconnected at a particular height. The sensors are placed on at least one of the faces of the profiles of the columns. Preferably, said sensors are placed on the four faces of the profiles of the columns, preferably at different heights. Even more preferably, a single sensor is installed on the upper portion of the column.

The present invention envisages positioning the sensors using different systems. Said systems include, by way of non-limiting example, a compact sensor system, a system having centralised gas extraction, and a system having centralised gas extraction and a sensor.

The present invention discloses a store for fodder bales in which, preferably, said fodder bales are alfalfa bales.

To aid understanding, explanatory yet non-limiting drawings are included of an embodiment of the present invention.
Fig. 1 is a schematic view of a first plan layout of sensors in a fodder bale store.
Fig. 2 is a perspective view of a detail of an example arrangement of a sensor in a compact hydrocarbon sensor system.
Fig. 3 is a perspective view of a compact hydrocarbon sensor system.
Fig. 4 is a perspective view of an example configuration of a column of the store.
Fig. 5 is a perspective view of the guide from the embodiment in Fig. 3.
Fig. 6 is a perspective view of a hydrocarbon sensor system having centralised gas extraction.
Fig. 7a and 7b are perspective views of the gas extraction setup from Fig. 6 (Fig. 7a) and the cover for the sensor (Fig. 7b) from Fig. 6.
Fig. 8 is a perspective view of a hydrocarbon sensor system having centralised gas extraction and sensor.
Fig. 9a and 9b are perspective views of the gas extraction and sensor setup from Fig. 8 (Fig. 9a) and of the inlet grille without comprising the sensor (Fig. 9b) from Fig. 8.
Fig. 10 is a schematic view of a second plan layout of sensors in a fodder bale store.

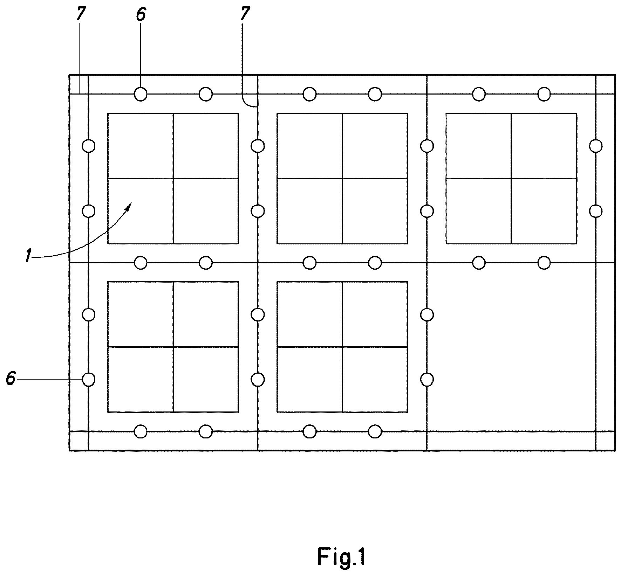

In the example from Fig. 1, a first embodiment of a plan layout of sensors in a fodder bale store is shown. Said store comprises an enclosure delimiting, in the interior thereof, an arrangement of fodder bales -1-. Said store is characterised in that it comprises a plurality of columns -6- on which one or more hydrocarbon sensors are placed. Said columns are arranged around said fodder bales. In the embodiment from the figure, said columns can be moved by means of guides -7- located in said store. In the embodiment from Fig. 1, the columns are circular. Said columns may be quadrangular. Said columns may also be of any other known shape.

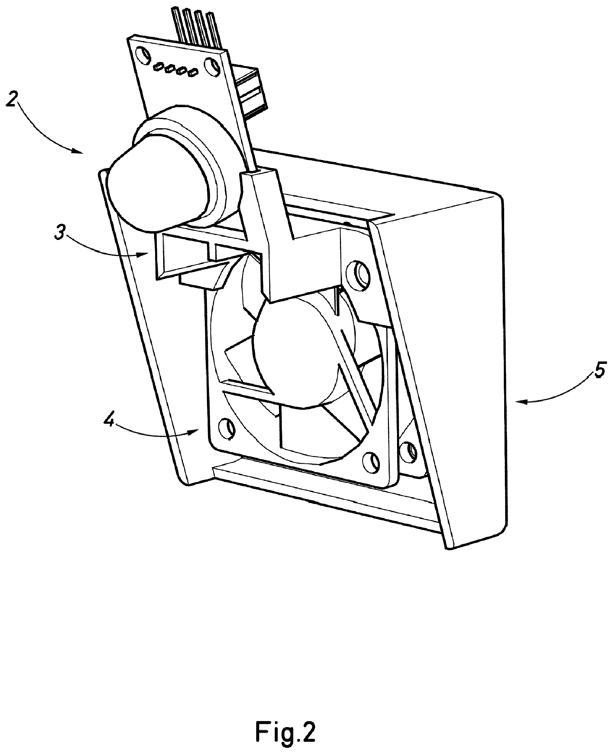

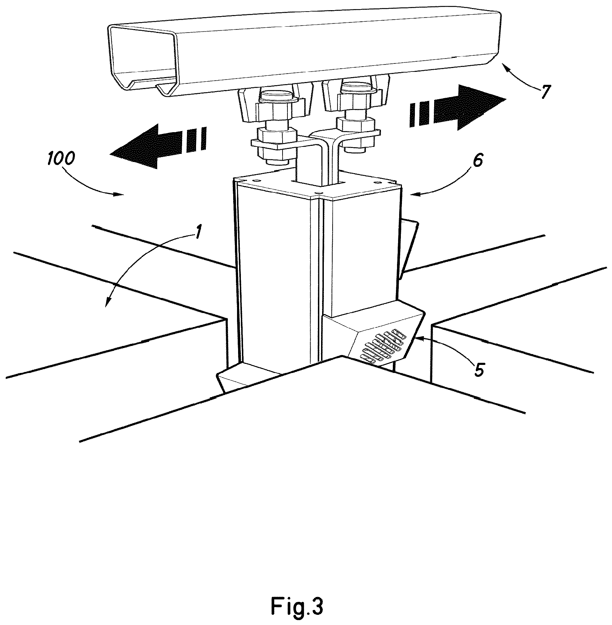

The sensors may be placed on the columns in various configurations. The example from Fig. 2 and 3 shows a possible arrangement of a hydrocarbon sensor -2- in an embodiment of a compact hydrocarbon sensor system suitable for use in a store. In the example from Fig. 2, the hydrocarbon sensor -2-, which detects the level of hydrocarbons in the environment, is connected to a sensor-bearing coupling -3- which is in turn connected to a fan -4- for forcing air into the sensor. The complete assembly is also composed of a protective cover having an air grille -5-. The example from Fig. 3 shows an example of a compact hydrocarbon sensor system -100- in which the configuration from Fig. 2 is located inside a column -6-that is connected to a guide -7-. The column from the figure is an interlocking profile. Said configuration makes it possible to move the sensor and the column on which said sensor is located through the store by means of the guide. In this embodiment, the air enters through the grille -5- and passes through the sensor -2-. In this configuration, the air-inlet grille is located on one or even the four faces of the profile of the column, at different heights.

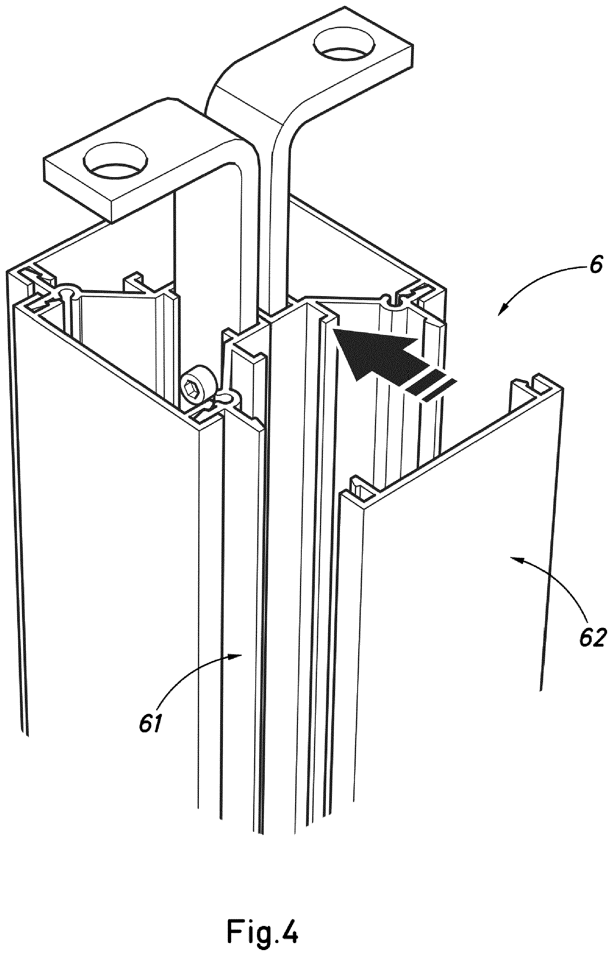

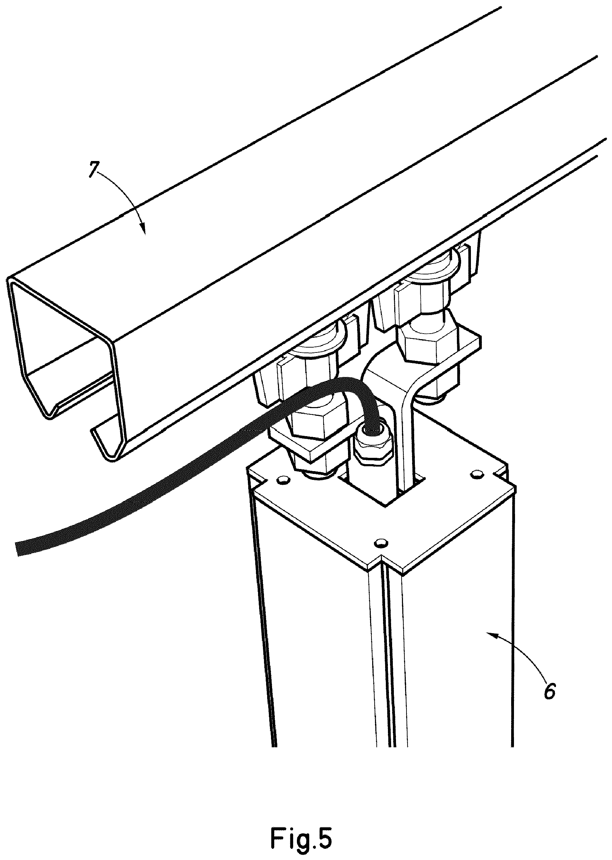

In the embodiment from Fig. 4, an embodiment is shown in which a column -6- is formed of an assembled profile -61-, which comprises a set of covers -62- in the places where the remaining elements are coupled to said profile. Fig. 5 is an internal view of the system for moving the column -6- along the guide -7-. The movement is carried out by means of an impeller.

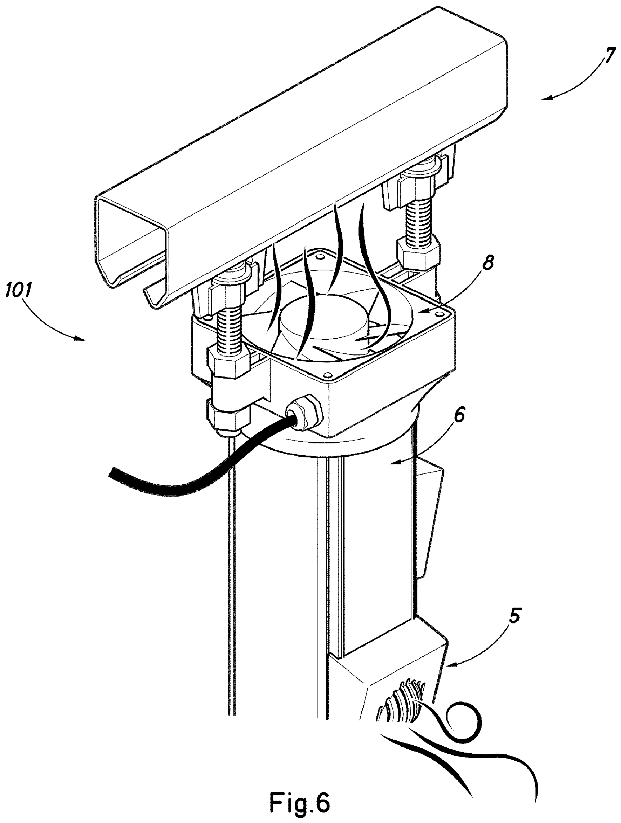

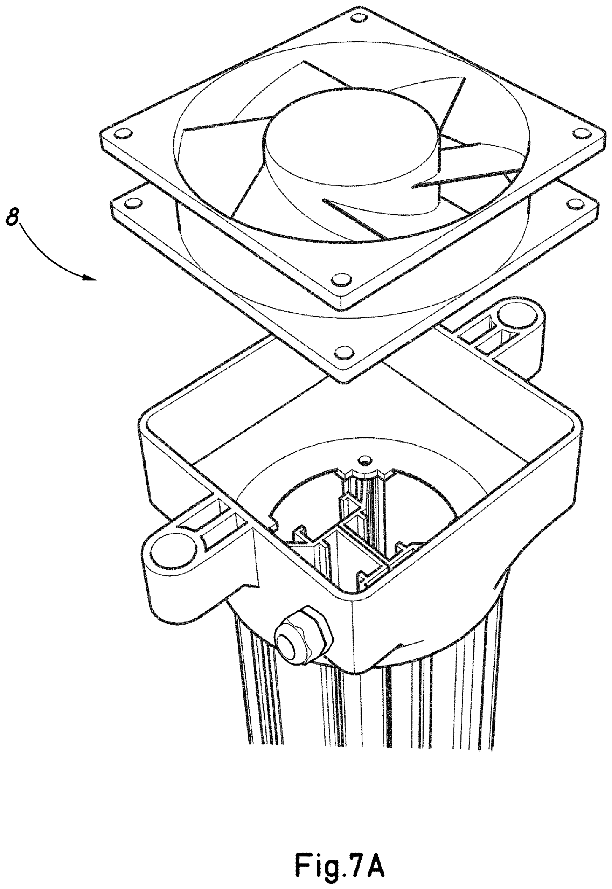

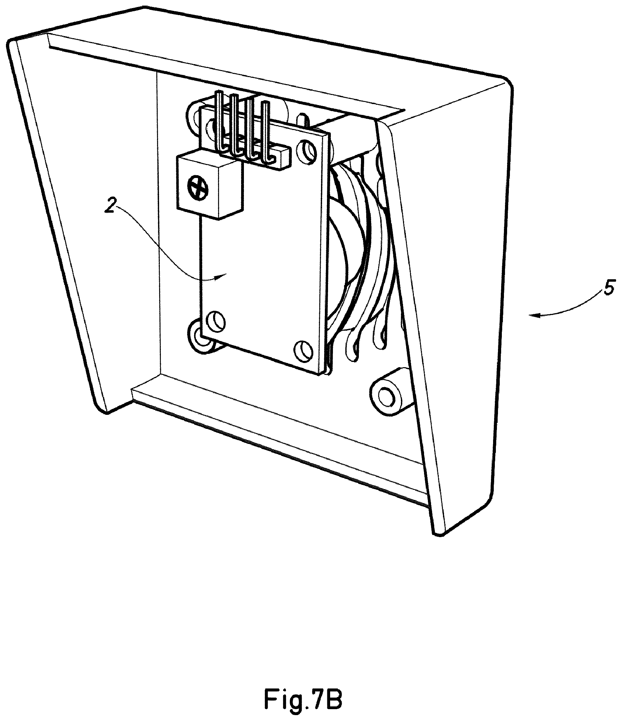

In the example from Fig. 6, another embodiment of a hydrocarbon sensor system -101- is shown which is suitable for use in a store. In this embodiment, the system includes a centralised gas extraction system -8- (see Fig. 7a). The hydrocarbon sensor -2- is placed on a protective cover comprising an air-inlet grille -5- (see Fig. 7b). In this embodiment, the air enters through the grille, passes through the sensor placed on the cover comprising the air-inlet grille, and exits through the gas extraction system. In this configuration, the air-inlet grille, together with the sensor, is placed on one or even the four faces of the profile of the columns, at different heights.

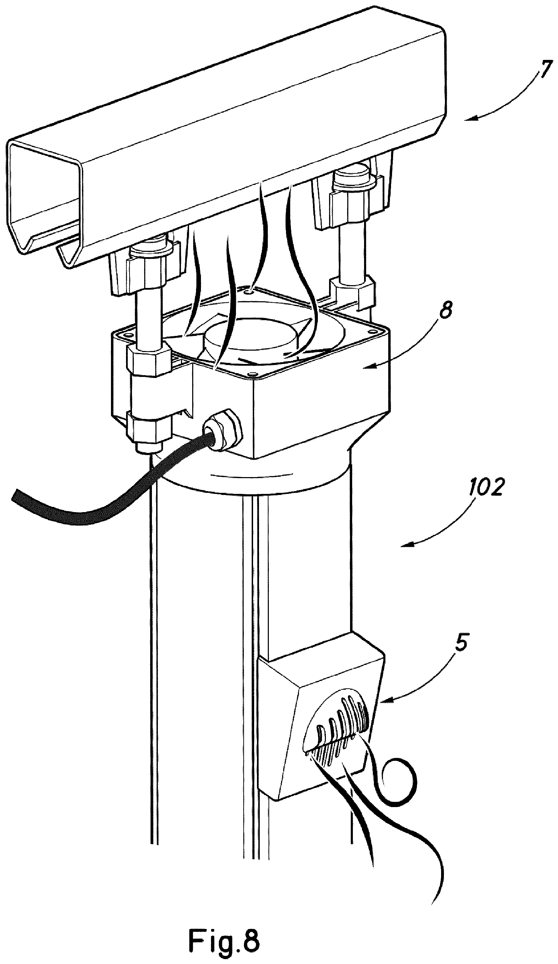

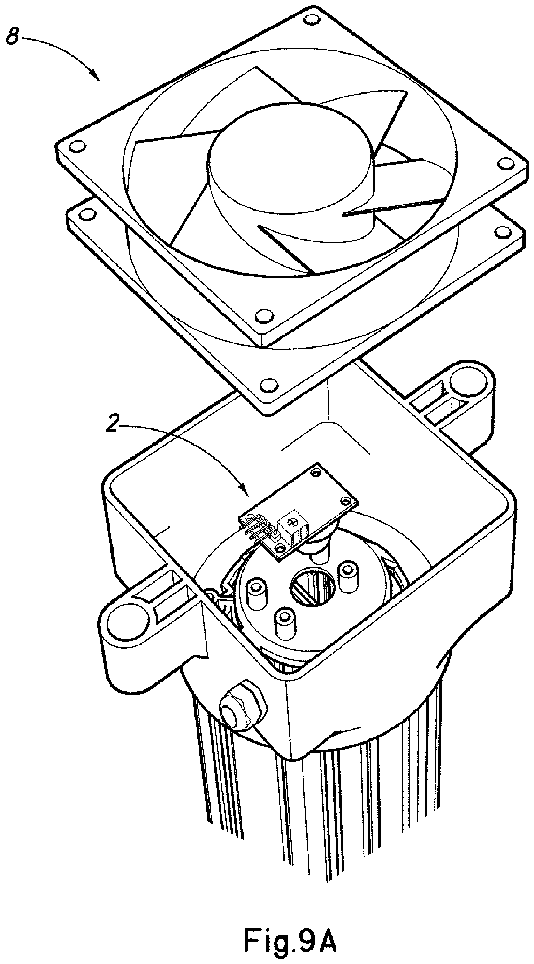

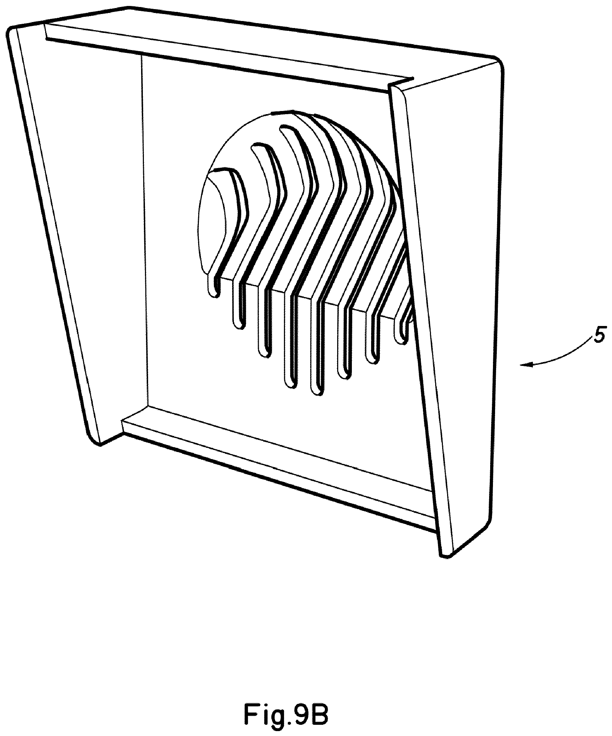

In the example from Fig. 8, a third embodiment is shown of a hydrocarbon sensor system -102- that is suitable for use in a store. In this embodiment, the system includes a centralised gas extraction system -8- (see Fig. 9a). The hydrocarbon sensor -2- is placed on said gas extraction system. In this embodiment, the sensor is not connected to the air-inlet grille -5- (see Fig. 9b). In this embodiment, the air enters through the grille, passes through the sensor placed on the gas extraction system, and exits through said gas extraction system. In this configuration, the air-inlet grille is placed on one or even the four faces of the profile of the column, at different heights. The gas extraction system incorporates a single sensor.

Alternatively, the sensors are placed on at least one of the profiles of the columns and at least one sensor is placed on the upper portion of said column, preferably next to the extraction system.

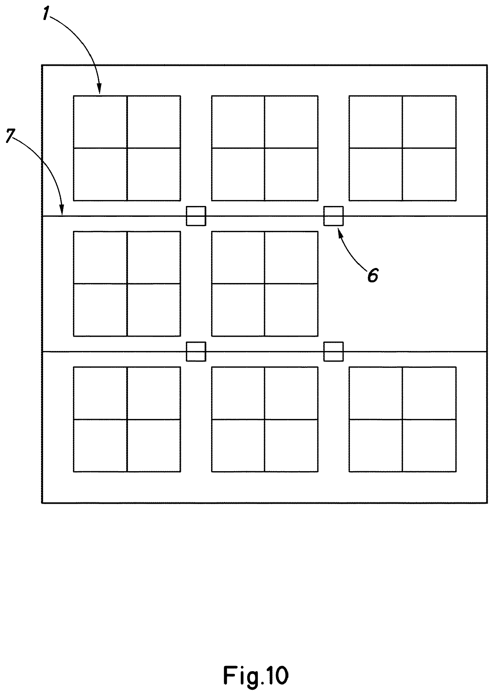

In the example from Fig. 10, a simplified embodiment is shown of a plan layout of sensors in a fodder bale store. Said store comprises an enclosure delimiting, in the interior thereof, an arrangement of fodder bales -1-. Said store is characterised in that it comprises a plurality of columns -6- on which one or more hydrocarbon sensors are arranged. In this embodiment, the hydrocarbon sensors are mounted on the four faces of the profile, at different heights. Said columns are arranged at the intersections of said fodder bales. In the embodiment from the figure, said columns can be moved by means of guides -7- located in said store. In this embodiment, the columns are quadrangular. Said columns may also be circular. Said columns may also be of any other known shape.

Although the invention has been described and shown based on various representative examples, it should be understood that these embodiments are examples and in no way limit the present invention. As such, any of the variations that are included directly or by way of equivalence in the appended claims should be considered to be included within the scope of the present invention.

## Claims

1. Store for fodder bales, comprising an enclosure delimiting, in the interior thereof, an arrangement of fodder bales, said store being **characterised in that** it comprises a plurality of hydrocarbon sensors arranged around said fodder bales.

2. Store according to claim 1, **characterised in that** said sensors are movable.

3. Store according to claim 2, **characterised in that** said sensors are placed on guides.

4. Store according to claim 3, **characterised in that** said guides are rails.

5. Store according to any one of the preceding claims, **characterised in that** said sensors are suspended.

6. Store according to any one of claims 3 to 5, **characterised in that** said sensors are connected to the guides or rails by slidable connection means.

7. Store according to any one of claims 2 to 6, **characterised in that** said sensors are placed on movable columns.

8. Store according to any one of the preceding claims, **characterised in that** said columns comprise interlocking profiles.

9. Store according to any one of the preceding claims, **characterised in that** said sensors are placed on at least one of the faces of the profiles of the columns.

10. Store according to any one of claims 7 to 9, **characterised in that** said sensors are placed on the four faces of the profiles of the columns.

11. Store according to any one of the preceding claims, **characterised in that** said sensors are placed at different heights.

12. Store according to any one of claims 7 to 11, **characterised in that** said columns are symmetrical quadrilateral profiles that are protected by covers in the places where the sensors are located.

13. Store according to any one of the preceding claims, **characterised in that** the fodder bales are bales of alfalfa.

14. Use of hydrocarbon-detection sensors for preventing combustion of fodder bales.

15. Use according to the preceding claim, **characterised in that** the fodder bales are bales of alfalfa.
